# EUROPEAN PATENT APPLICATION

(11) **EP 4 787 492 A1**
(43) Date of publication of application: **05.08.2026**
(21) Application number: 26152247.8
(22) Date of filing: 16.01.2026
(51) Int. Cl.: H01M 4/58, H01M 4/62, H01M 4/36, H01M 4/38, H01M 4/136, H01M 10/0562, H01M 10/052

(54) **BATTERY**

(30) Priority: 31.01.2025 JP 2025015288
(71) Applicant: Toyota Jidosha Kabushiki Kaisha, Toyota-shi, Aichi-ken 471-8571 (JP)
(72) Inventor: Asakura, Ryo, Toyota- shi, Aichi-ken, 471-8571 (JP); Shiotani, Shinya, Toyota- shi, Aichi-ken, 471-8571 (JP)
(74) Representative: Winter, Brandl - Partnerschaft mbB

(57) **Abstract**

Batteries using a positive electrode mixture comprising a sulfur-based positive electrode active material have room for improvement in terms of cycle characteristics. The battery of the present disclosure comprises a positive electrode mixture layer, an electrolyte layer, and a negative electrode. The positive electrode mixture layer comprises a sulfur-based active material, a P-containing sulfide, and carbon. BET specific surface area of the carbon is 350 m²/g or more. A molar ratio P/S between P and S contained in the positive electrode mixture layer is greater than 0.06 and less than 0.24.

## Description

### TECHNICAL FIELD

The present application discloses a battery.

### BACKGROUND ART

PTL 1 discloses a battery using a positive electrode mixture comprising a sulfur-based positive electrode active material.

### CITATION LIST

### PATENT LITERATURE

PTL 1 Japanese Unexamined Patent Publication (Kokai) No. 2019-212615

### SUMMARY

### TECHNICAL PROBLEM

Batteries using a positive electrode mixture comprising a sulfur-based positive electrode active material have room for improvement in terms of cycle characteristics.

### SOLUTION TO PROBLEM

The present application discloses the following plurality of aspects as means for achieving the above object.

### <Aspect 1>

A battery, comprising a positive electrode mixture layer, an electrolyte layer, and a negative electrode, wherein
the positive electrode mixture layer comprises a sulfur-based active material, a P-containing sulfide, and carbon,
BET specific surface area of the carbon is 350 m²/g or more, and
a molar ratio P/S between P and S contained in the positive electrode mixture layer is greater than 0.06 and less than 0.24.

### <Aspect 2>

The battery according to Aspect 1, wherein
the carbon is carbon nanotube.

### <Aspect 3>

The battery according to Aspect 1 or 2, wherein
BET specific surface area of the carbon is 1000 m²/g or more.

### <Aspect 4>

The battery according to any of Aspects 1 to 3, wherein
the electrolyte layer comprises a solid electrolyte.

### <Aspect 5>

The battery according to any of Aspects 1 to 4, wherein
the negative electrode involves deposition of metallic lithium during charging, and involves dissolution of metallic lithium during discharging.

### ADVANTAGEOUS EFFECTS OF INVENTION

The battery of the present disclosure has excellent cycle characteristics.

### BRIEF DESCRIPTION OF DRAWINGS

FIG. 1 schematically shows one example of a configuration of the battery.
FIG. 2 schematically shows configurations of the pressed cells of the Comparative Examples and Examples.

### DESCRIPTION OF EMBODIMENTS

Hereinafter, one embodiment of the battery of the present disclosure will be described. However, the battery of the present disclosure is not limited to the embodiment described below.

### 1. Battery

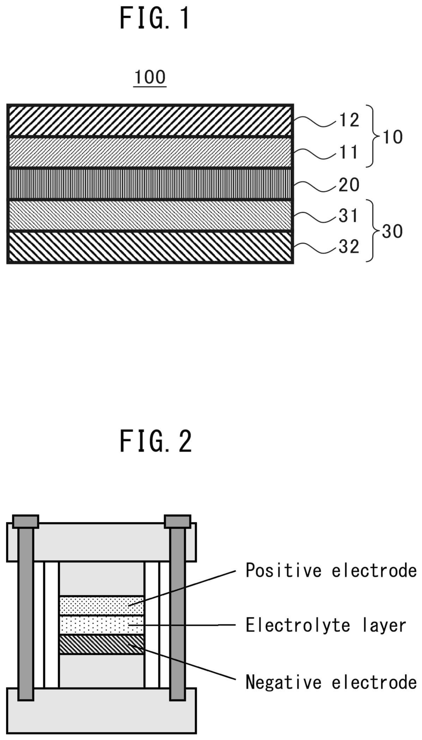

As shown in FIG. 1, the battery 100 according to one embodiment comprises a positive electrode mixture layer 11, an electrolyte layer 20, and a negative electrode 30. The positive electrode mixture layer 11 comprises a sulfur-based active material, a P-containing sulfide, and carbon. BET specific surface area of the carbon is 350 m²/g or more. A molar ratio P/S between P and S contained in the positive electrode mixture layer 11 is greater than 0.06 and less than 0.24.

### 1.1 Positive electrode

As shown in FIG. 1, the positive electrode 10 of the battery 100, for example, may comprise a positive electrode mixture layer 11 and a positive electrode current collector 12 in contact with the positive electrode mixture layer 11. The positive electrode mixture layer 11 may be formed on a surface of the positive electrode current collector 12.

### 1.1.1 Positive electrode mixture layer

The positive electrode mixture layer 11 comprises a sulfur-based active material, a P-containing sulfide, and carbon. The positive electrode mixture layer 11 may comprise one or more of an additional active material, an additional electrolyte, an additional conductive material, and a binder, in addition to the sulfur-based active material, a P-containing sulfide, and carbon. When the positive electrode mixture layer 11 comprises a sulfur-based active material and a P-containing sulfide, and a predetermined molar ratio P/S is satisfied, ion conductivity in the positive electrode mixture layer 11 increases. When the positive electrode mixture layer 11 comprises a sulfur-based active material and carbon, and the carbon has a predetermined BET specific surface area or above, electronic conductivity in the positive electrode mixture layer 11 increases. As a result, utilization rate of the sulfur-based active material in the positive electrode mixture layer 11 increases, and cycle characteristics of the battery are likely to improve.

1.1.1.1 Sulfur-based active material

The sulfur-based active material contained in the positive electrode mixture layer 11 needs only to be a material capable of reacting with Li ions, which are charge-compensating ions during discharging, to generate a compound comprising sulfur and lithium (for example, a sulfide such as Li₂S) as a discharge product and releasing Li ions during charging. The sulfur-based active material may comprise elemental sulfur, or may consist of elemental sulfur. Elemental sulfur may or may not be octasulfur (S₈). The octasulfur (S₈) may be α-sulfur, may be β-sulfur, may be γ-sulfur, or may be a combination thereof. The sulfur-based active material contained in the positive electrode mixture layer 11 may be in solid solution with the P-containing sulfide described below, or may be chemically bonded to the P-containing sulfide. For example, the S in the sulfur-based active material may be chemically bonded with the S in the P-containing sulfide. The shape of the sulfur-based active material contained in the positive electrode mixture layer 11 is not particularly limited, and for example, may be particulate, or may be indeterminate. Whether the positive electrode mixture layer 11 comprises a sulfur-based active material can be determined by carrying out various analyses, such as XAFS, XRD, and NMR, for the positive electrode mixture constituting the positive electrode mixture layer 11. For example, if the positive electrode mixture layer 11 consists of a positive electrode mixture comprising elemental sulfur, when an X-ray diffraction pattern, in which CuKα is used as the radiation source, is acquired for the positive electrode mixture, diffraction peaks originating from elemental sulfur are identified in the X-ray diffraction pattern. The diffraction peaks originating from elemental sulfur typically appear at 20 = 23.05°±0.50°, 25.84°±0.50°, and 27.70°±0.50°.

The amount of sulfur-based active material contained in the positive electrode mixture layer 11 is not particularly limited, and needs only to be appropriately determined in accordance with target battery performance. In one embodiment, the content of the sulfur-based active material in the positive electrode mixture layer 11 may be 20% by mass or more and 70% by mass or less, or 30% by mass or more and 60% by mass or less.

### 1.1.1.2 P-containing sulfide

The P-containing sulfide contained in the positive electrode mixture layer 11 comprises at least P and S as constituent elements, and may further comprise an additional element M. Examples of the additional element M include one or more of Ge, Sn, Si, B, and Al. The P-containing sulfide may or may not comprise Li as a constituent element, in addition to P and S and optionally the element M. The P-containing sulfide may comprise a sulfide as a compound of P and S (for example, P₂S₅). The P-containing sulfide may have an orthostructure of P element (PS₄ structure). The P-containing sulfide may bond with the above sulfur-based active material for amorphization, and may be present as P₂S₆⁴⁻ or P₂S₇⁴⁻. The shape of the P-containing sulfide in the positive electrode mixture layer 11 is not particularly limited, and for example, may be particulate, or may be indeterminate. Whether the positive electrode mixture layer 11 comprises a P-containing sulfide can be determined by carrying out various analyses, such as XAFS, XRD, and NMR, for the positive electrode mixture constituting the positive electrode mixture layer 11. For example, if the positive electrode mixture layer 11 consists of a composite material comprising P₂S₅, when an X-ray diffraction pattern, in which CuKα is used as the radiation source, is acquired for the composite material, diffraction peaks originating from P₂S₅ are identified in the X-ray diffraction pattern. The diffraction peaks originating from P₂S₅ typically appear at 20 = 25.84°±0.50°, 30.35°±0.50°, and 31.32°±0.50°. When the positive electrode mixture is measured by XAFS, a peak originating from P₂S₅ is identified. When the positive electrode mixture is measured by NMR, the peak originating from P₂S₅ is identified.

The molar ratio P/S between P element and S element contained in the positive electrode mixture layer 11 is greater than 0.06 and less than 0.24. Accordingly, the positive electrode mixture layer 11 is likely to have high ion conductivity. The molar ratio P/S may be 0.07 or greater, 0.08 or greater, 0.09 or greater, 0.10 or greater, 0.11 or greater, 0.12 or greater, 0.13 or greater, 0.14 or greater, or 0.15 or greater, and may be 0.23 or less, 0.22 or less, 0.21 or less, 0.20 or less, 0.19 or less, or 0.18 or less. In one embodiment, the molar ratio P/S may be 0.10 or greater and 0.21 or less, or 0.15 or greater and 0.20 or less. The denominator of the molar ratio P/S refers to the total amount of S element contained in the positive electrode mixture layer 11. In the case in which the positive electrode mixture layer 11 comprises a sulfur-based active material, a P-containing sulfide, and the additional sulfide described below, since these materials all contain S element, the amounts of S element are summed to be used as the denominator of the molar ratio P/S.

The amount of P-containing sulfide contained in the positive electrode mixture layer 11 needs only to be appropriately determined in accordance with target battery performance, in a range in which the above molar ratio P/S is satisfied. In one embodiment, the content of the P-containing sulfide in the positive electrode mixture layer 11 may be 20% by mass or more and 70% by mass or less, or 30% by mass or more and 60% by mass or less.

### 1.1.1.2 Carbon

The carbon contained in the positive electrode mixture layer 11 needs only to have a predetermined BET specific surface area or above. The carbon, for example, may be carbon nanotube, may be porous carbon such as activated carbon, or may be a combination thereof. Particularly, when the carbon contained in the positive electrode mixture layer 11 is carbon nanotube, high performance of the battery is easily ensured. The carbon nanotube may be single-walled carbon nanotube, may be multi-walled carbon nanotube, or may be a combination thereof. Particularly, when single-walled carbon nanotube is adopted, high performance of the battery is easily ensured. The diameter (outer diameter) of the single-walled carbon nanotube, for example, is 4 nm or less, and may be 1 nm or more and 3 nm or less. The diameter (outer diameter) of the multi-walled carbon nanotube, for example, is more than 4 nm, and may be 5 nm or more or 10 nm or more. The aspect ratio (length/outer diameter) of the carbon nanotube is not particularly limited. Whether the positive electrode mixture layer 11 comprises carbon nanotube can be determined by, for example, inspection of the positive electrode mixture layer 11 by SEM and elemental analysis of the positive electrode mixture layer 11.

The BET specific surface area of carbon contained in the positive electrode mixture layer 11 is 350 m²/g or more. A positive electrode mixture layer 11 comprising carbon having such a high specific surface area has high electronic conductivity. The BET specific surface area of carbon contained in the positive electrode mixture layer 11 may be 400 m²/g or more, 450 m²/g or more, 500 m²/g or more, 550 m²/g or more, 600 m²/g or more, 650 m²/g or more, 700 m²/g or more, 750 m²/g or more, 800 m²/g or more, 850 m²/g or more, 900 m²/g or more, 950 m²/g or more, 1000 m²/g or more, 1050 m²/g or more, 1100 m²/g or more, or 1150 m²/g or more. The upper limit of the BET specific surface area is not particularly limited. The BET specific surface area, for example, 2000 m²/g or less, 1900 m²/g or less, 1800 m²/g or less, 1700 m²/g or less, 1600 m²/g or less, 1550 m²/g or less, 1500 m²/g or less, 1450 m²/g or less, 1400 m²/g or less, 1350 m²/g or less, 1300 m²/g or less, 1250 m²/g or less, or 1200 m²/g or less. In one embodiment, the BET specific surface area of carbon contained in the positive electrode mixture layer 11 may be 1000 m²/g or more and 1600 m²/g or less, or 1100 m²/g or more and 1550 m²/g or less. The BET specific surface area of carbon contained in the positive electrode mixture layer 11 can be determined by the BET method using nitrogen as an adsorbed gas. Specifically, the carbon used in the positive electrode mixture layer 11 is vacuum-dried at 120°C for 12 h, and then the BET specific surface are (m²/g) of the carbon is measured using a specific surface area measuring apparatus (BERSORP-MAX (MicrotracBEL Corp.)), in accordance with, for example, JIS Z8830:2013.

The amount of carbon contained in the positive electrode mixture layer 11 is not particularly limited, and needs only to be appropriately determined in accordance with target battery performance. In one embodiment, the content of carbon in the positive electrode mixture layer 11 may be 10% by mass or more and 40% by mass or less, or 15% by mass or more and 30% by mass or less.

### 1.1.1.4 Additional components

The positive electrode mixture layer 11 may comprise an additional component such as an additional active material, an additional sulfide, an additional conductive material, or a binder. The content of the additional component in the positive electrode mixture layer 11 is not particularly limited. The additional active material, for example, may include various lithium-containing compounds. The lithium-containing compound may include various lithium-containing oxides such as lithium cobaltate, lithium nickelate, Li_{1±α}Ni_{1/3}Co_{1/3}Mn_{1/3}O_{2±δ}, lithium manganate, spinel-based lithium compounds (heteroelement-substituted Li-Mn spinels having a composition represented by Li₁₊ₓMn_{2-x-y}M_{y}O₄ (M is one or more selected from Al, Mg, Co, Fe, Ni, and Zn)), lithium titanate, and lithium metal phosphate (such as LiMPO₄; M is one or more selected from Fe, Mn, Co, and Ni). The higher the proportion of sulfur-based active material in the entire positive electrode active material, the more likely the expansion and contraction of the positive electrode mixture layer 11 during charging and discharging increase, and the more likely cycle characteristics degrade. According to the present embodiment, when the molar ratio P/S and BET specific surface area described above are satisfied, cycle characteristics are likely to improve. The proportion of sulfur-based active material in the total active material contained in the positive electrode mixture layer may be 50% by mass or more and 100% by mass or less, 70% by mass or more and 100% by mass or less, 90% by mass or more and 100% by mass or less, or 95% by mass or more and 100% by mass or less. The additional sulfide, for example, may comprise at least an element M (M, for example, is one or more of Ge, Sn, Si, B, and Al) and S as constituent elements. The additional sulfide may contain an orthostructure of the element M. Examples of orthostructures of the element M include one or more of GeS₄-type structure, SnS₄-type structure, SiS₄-type structure, BS₃-type structure, and AlS₃-type structure. The additional sulfide may include sulfides (MₓS_{y}) as compounds of the elements M and S. The x and y are integers that impart electrical neutrality with S depending on M. Examples of MₓS_{y} include one or more of GeS₂, SnS₂, SiS₂, B₂S₃, and Al₂S₃. Examples of the additional conductive material include carbon of various types other than carbon nanotube and various metal materials. The positive electrode mixture layer 11 may comprise only carbon or only carbon nanotube as the conductive material. The binder, for example, may be one or more selected from butadiene rubber (BR)-based binders, butylene rubber (IIR)-based binders, acrylate-butadiene rubber (ABR)-based binders, styrene-butadiene rubber (SBR)-based binders, polyvinylidene fluoride (PVdF)-based binders, polytetrafluoroethylene (PTFE)-based binders, and polyimide (PI)-based binders.

The shape and thickness of the positive electrode mixture layer 11 are not particularly limited, and need only to be appropriately determined in consideration of target battery performance. The positive electrode mixture layer 11 may be a sheet having a substantially flat surface. The thickness of the positive electrode mixture layer 11, for example, may be 0.1 µm or more, 1 µm or more, 10 µm or more, or 30 µm or more, and may be 2 mm or less, 1 mm or less, 500 µm or less, or 100 µm or less.

### 1.1.2 Positive electrode current collector

As shown in FIG. 1, the positive electrode 10 of the battery 100 may comprise a positive electrode current collector 12 in contact with the positive electrode mixture layer 11. The constituent material, shape, and size of the positive electrode current collector 12 are not particularly limited. The positive electrode current collector 12, for example, may be foil-like or plate-like. The positive electrode current collector 12 may be a metal foil. Alternatively, the positive electrode current collector 12 may have a layer consisting of a resin composition comprising a resin and a conductive material. Alternatively, the positive electrode current collector 12 may comprise a combination of a metal foil and a layer consisting of a resin composition. The positive electrode current collector 12 may consist of a plurality of foils or sheets. Examples of metals constituting the foil for the positive electrode current collector 12 include at least one selected from Cu, Ni, Cr, Au, Pt, Ag, Al, Fe, Ti, Zn, Co, V, Mg, Pb, Ge, In, Sn, Zr, and stainless steel. Particularly, from the viewpoint of ensuring oxidation resistance, the positive electrode current collector 12 may comprise Al. The positive electrode current collector 12 may be a metal foil or a substrate plated or vapor-deposited with a metal described above. When the positive electrode current collector 12 consists of a plurality of metal foils, there may be some layer between the plurality of metal foils. The thickness of the positive electrode current collector 12 is not particularly limited. The thickness of the positive electrode current collector 12, for example, may be 1 µm or more or 1 mm or less.

### 1.2 Electrolyte layer

As shown in FIG. 1, the electrolyte layer 20 is arranged between the positive electrode mixture layer 11 and the negative electrode 30. The electrolyte layer 20 comprises at least an electrolyte. The electrolyte layer 20 may be at least one of a solid electrolyte and a liquid electrolyte (electrolytic solution), and may further optionally comprise a binder. Particularly, when the electrolyte layer 20 comprises a solid electrolyte, higher performance is easily ensured. The electrolyte layer 20 may be a solid electrolyte layer free of a liquid electrolyte. According to the present technique, utilization rate of the sulfur-based active material in the positive electrode mixture layer 11 can be increased, localized expansion of the positive electrode mixture layer 11 during charging and discharging of the battery is suppressed, and cracking of the solid electrolyte layer is less likely to occur. Alternatively, the electrolyte layer 20 may have a separator for retaining a liquid electrolyte and preventing contact between the positive electrode mixture layer 11 and the negative electrode 30. The thickness of the electrolyte layer 20 is not particularly limited, and for example, may be 0.1 µm or more or 1 µm or more, and may be 2 mm or less or 1 mm or less. The electrolyte layer 20 may consist of one layer, or may consist of a plurality of layers. For example, the electrolyte layer 20 may comprise a first layer arranged on the positive electrode mixture layer 11 side and a second layer arranged on the negative electrode 30 side, and may be an electrolyte layer in which the first layer comprises a first electrolyte, and the second layer comprises a second electrolyte. The first electrolyte and the second electrolyte may be of different types from one another. The first electrolyte and the second electrolyte may each be at least one selected from oxide solid electrolytes, sulfide solid electrolytes, and solid electrolytes having ion-binding properties described below. For example, the first layer may comprise a solid electrolyte having ion-binding properties, and the second layer may comprise at least one of a solid electrolyte having ion-binding properties and a sulfide solid electrolyte.

### 1.2.1 Solid electrolyte

The solid electrolyte may be an inorganic solid electrolyte or an organic polymer electrolyte. Particularly, an inorganic solid electrolyte exhibits excellent ion conductivity and heat resistance. Examples of the inorganic solid electrolyte include oxide solid electrolytes, sulfide solid electrolytes, and inorganic solid electrolytes having ion-binding properties. Among inorganic solid electrolytes, sulfide solid electrolytes, especially sulfide solid electrolytes comprising at least Li, S, and P as constituent elements, have high performance. Alternatively, among inorganic solid electrolytes, solid electrolytes having ion-binding properties, especially solid electrolytes comprising at least Li, Y, and a halogen (at least one of Cl, Br, I, and F) as constituent elements, have high performance. The solid electrolyte may be amorphous, or may be crystalline. The solid electrolyte may be particulate. The average particle size (D50) of the solid electrolyte, for example, may be 10 nm or more and 10 µm or less.

The oxide solid electrolyte may be one or more selected from lithium lanthanum zirconate, LiPON, Li₁₊ₓAlₓGe₂₋ₓ(PO₄)₃, Li-SiO-based glass, and Li-Al-S-O-based glass. When an oxide solid electrolyte and a liquid electrolyte are combined, ion conductivity can be improved.

The sulfide solid electrolyte may be a glass-based sulfide solid electrolyte (sulfide glass), may be a glass-ceramic-based sulfide solid electrolyte, or may be a crystal-based sulfide solid electrolyte. The sulfide glass is amorphous. The sulfide glass may have a glass transition temperature (Tg). When the sulfide solid electrolyte has a crystal phase, examples of the crystal phase include Thio-LISICON-type crystal phase, LGPS-type crystal phase, and argyrodite-type crystal phase. The sulfide solid electrolyte may be particulate. The average particle size (D50) of the sulfide solid electrolyte, for example, may be 10 nm or more and 100 µm or less.

The sulfide solid electrolyte, for example, may contain Li element, an X element (X is at least one of P, As, Sb, Si, Ge, Sn, B, Al, Ga, and In), and S element. The sulfide solid electrolyte may further contain at least one of O element and a halogen element. The sulfide solid electrolyte may contain S element as an anionic element main component.

The sulfide solid electrolyte, for example, may be at least one selected from Li₂S-P₂S₅, Li₂S-P₂S₅-LiI, Li₂S-P₂S₅-GeS₂, Li₂S-P₂S₅-Li₂O, Li₂S-P₂S₅-Li₂O-LiI, Li₂S-P₂S₅-LiI-LiBr, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are positive numbers, and Z is any of Ge, Zn, and Ga), Li₂S-GeS₂, Li₂S-SiS₂-Li₃PO₄, and Li₂S-SiS₂-LiₓMO_{y} (where x and y are positive numbers, and M is any of P, Si, Ge, B, Al, Ga, and In).

The composition of the sulfide solid electrolyte is not particularly limited. Examples thereof include xLi₂S·(100 - x)P₂S₅ (70 ≤ x ≤ 80) and yLiI·zLiBr·(100 - y - z)(xLi₂S·(1 - x)P₂S₅) (0.7 ≤ x ≤ 0.8, 0 ≤ y ≤ 30, and 0 ≤ z ≤ 30). Alternatively, the sulfide solid electrolyte may have a composition represented by general formula: Li₄₋ₓGe₁₋ₓPₓS₄ (0 < x < 1). In the above general formula, at least a portion of Ge may be substituted with at least one of Sb, Si, Sn, B, Al, Ga, In, Ti, Zr, V, and Nb. In the above general formula, at least a portion of P may be substituted with at least one of Sb, Si, Sn, B, Al, Ga, In, Ti, Zr, V, and Nb. In the above general formula, a portion of Li may be substituted with at least one of Na, K, Mg, Ca, and Zn. In the above general formula, a portion of S may be substituted with a halogen (at least one of F, Cl, Br, and I). Alternatively, the sulfide solid electrolyte may have a composition represented by Li₇₋ₐPS₆₋ₐXₐ (X is at least one of Cl, Br, and I, and a is a number of 0 or greater and 2 or less). a may be 0, or may be greater than 0. In the latter case, a may be 0.1 or greater, may be 0.5 or greater, or may be 1 or greater. In addition, a may be 1.8 or less, or may be 1.5 or less.

The solid electrolyte having ion-binding properties, for example, may comprise at least one element selected from the group consisting of Mg, Ca, Sr, Ba, Zn, Sn, Al, Sc, Ga, Bi, Sb, Zr, Hf, Ti, Ta, Nb, W, Y, Gd, Tb, and Sm. These elements can generate cations in water. The ion-binding solid electrolyte material, for example, may comprise at least one halogen element selected from the group consisting of Cl, Br, I, and F. These elements can generate anions in water. The solid electrolyte having ion-binding properties may comprise at least one selected from the group consisting of Gd, Ca, Zr, and Y, at least one selected from the group consisting of Cl, Br, I, and F, and Li. The solid electrolyte having ion-binding properties comprises Li and Y, and may comprise at least one selected from the group consisting of Cl, Br, I, and F. More specifically, the solid electrolyte having ion-binding properties may comprise Li, Y, Cl, and Br, may comprise Li, Ca, Y, Gd, Cl, and Br, or may comprise Li, Zr, Y, and Cl. Even more specifically, the solid electrolyte having ion-binding properties may be at least one of Li₃YBr₂Cl₄, Li_{2.8}Ca_{0.1}Y_{0.5}Gd_{0.5}Br₂Cl₄, and Li_{2.5}Y_{0.5}Zr_{0.5}Cl₆.

The solid electrolyte having ion-binding properties may be a halide solid electrolyte. A halide solid electrolyte exhibits excellent ion conductivity. The halide solid electrolyte may have a composition represented by, for example, formula (A):

Li_{α}M_{β}X_{γ} ... (A)

where α, β, and γ are each independently a value greater than 0, M is at least one selected from the group consisting of metal elements other than Li and semimetal elements, and X is at least one selected from the group consisting of Cl, Br, and I. Note that a "semimetal element" may be at least one selected from the group consisting of B, Si, Ge, As, Sb, and Te. Further, a "metal element" may include (i) all of the elements contained from Group 1 to Group 12 of the periodic table (excluding hydrogen) and (ii) all of the elements contained from Group 13 to Group 16 of the periodic table (excluding B, Si, Ge, As, Sb, Te, C, N, P, O, S, and Se). A metal element can form an inorganic compound with halide ions and form cations.

In the formula (A), M may comprise Y (i.e., yttrium). A halide solid electrolyte comprising Y may have a composition represented by LiₐMe_{b}Y_{c}X₆ (where a + mb + 3c = 6, c > 0, Me is at least one selected from the group consisting of metal elements and semimetal elements other than Li and Y, and m is the valence of Me). Me, for example, may be at least one selected from the group consisting of Mg, Ca, Sr, Ba, Zn, Sc, Al, Ga, Bi, Zr, Hf, Ti, Sn, Ta, and Nb.

The halide solid electrolyte may have a composition represented by formula (A1): Li_{6-3d}Y_{d}X₆. In the formula (A1), X is one or more elements selected from the group consisting of Cl, Br, and I. d may satisfy 0 < d < 2, or may be d = 1. The halide solid electrolyte may have a composition represented by formula (A2): Li_{3-3δ}Y_{1+δ}Cl₆. In the formula (A2), δ may be 0 < δ ≤ 0.15. The halide solid electrolyte may have a composition represented by formula (A3): Li_{3-3δ}Y_{1+δ}Br₆. In the formula (A3), δ may be 0 < δ ≤ 0.25. The halide solid electrolyte may have a composition represented by formula (A4): Li_{3-3δ+a}Y_{1+δ-a}MeₐCl_{6-x-y}BrₓI_{y}. In the formula (A4), Me may be at least one selected from the group consisting of Mg, Ca, Sr, Ba, and Zn. In the formula (A4), for example, -1 < δ < 2, 0 < a < 3, 0 < (3 - 3δ + a), 0 < (1 + δ - a), 0 ≤ x ≤ 6, 0 ≤ y ≤ 6, and (x + y) ≤ 6 are satisfied. The halide solid electrolyte may have a composition represented by formula (A5): Li_{3-3δ}Y_{1+δ-a}MeₐCl_{6-x-y}BrₓI_{y}. In the formula (A5), Me may be at least one selected from the group consisting of Al, Sc, Ga, and Bi. In the formula (A5), the variables may satisfy -1 < δ < 1, 0 < a < 2, 0 < (1 + δ - a), 0 ≤ x ≤ 6, 0 ≤ y ≤ 6, and (x + y) ≤ 6. The halide solid electrolyte may have a composition represented by formula (A6): Li_{3-3δ-a}Y_{1+δ-a}MeₐCl_{6-x-y}BrₓI_{y}. In the formula (A6), Me may be at least one selected from the group consisting of Zr, Hf, and Ti. In the formula (A6), the variables may satisfy -1 < δ < 1,0 < a < 1.5, 0 < (3 - 30 - a), 0 < (1 + δ - a), 0 ≤ x ≤ 6, 0 ≤ y ≤ 6, and (x + y) ≤ 6. The halide solid electrolyte may have a composition represented by formula (A7): Li_{3-3δ-2a}Y_{1+δ-a}MeₐCl_{6-x-y}BrₓI_{y}. In the formula (A7), Me may be at least one selected from the group consisting of Ta and Nb. In the formula (A7), the variables may satisfy -1 < δ < 1, 0 < a < 1.2, 0 < (3 - 3δ - 2a), 0 < (1 + δ - a), 0 ≤ x ≤ 6, 0 ≤ y ≤ 6, and (x + y) ≤ 6.

The solid electrolyte having ion-binding properties may be a complex hydride solid electrolyte. The complex hydride solid electrolyte can be composed of Li ions and complex ions comprising H. The complex ion comprising H, for example, may comprise an element M comprising at least one of nonmetal elements, semimetal elements, and metal elements and H bonded to the element M. In the complex ion comprising H, an element M as a central element and H surrounding the element M may be bonded to each other via a covalent bond. The complex ion comprising H may be represented by (MₘHₙ)^{α-}. In this case, m can be any positive number, and n and α can take on any positive number depending on m and the valence of the element M. The element M needs only to be any nonmetal element or metal element that can form a complex ion. For example, the element M may comprise at least one of B, C, and N as a nonmetal element, or may comprise B. Further, for example, the element M may comprise at least one of Al, Ni, and Fe as a metal element. Particularly, when the complex ion comprises B or comprises C and B, higher ion conductivity is easily ensured. Specific examples of the complex ion comprising H include (CB₉H₁₀)⁻, (CB₁₁H₁₂)⁻, (B₁₀H₁₀)²⁻, (B₁₂H₁₂)²⁻, (BH₄)⁻, (NH₂)⁻, (AlH₄)⁻, and combinations thereof. Particularly, when (CB₉H₁₀)⁻, (CB₁₁H₁₂)⁻, or a combination thereof is used, higher ion conductivity is easily ensured. Specifically, the complex hydride solid electrolyte may comprise Li, C, B, and H.

### 1.2.2 Liquid electrolyte

The liquid electrolyte (electrolytic solution) is a liquid comprising lithium ions as carrier ions. The electrolytic solution may be a water-based electrolytic solution or a non-water-based electrolytic solution. The composition of the electrolytic solution needs only to be the same as any known electrolytic solution for lithium-ion batteries. The electrolytic solution may be water or a non-water-based solvent in which a lithium salt is dissolved. Examples of the non-water-based solvent include various carbonate-based solvents. Examples of the lithium salt include lithium amide salts and LiPF₆. The separator for retaining a liquid electrolyte needs only to be a commonly used separator in batteries, and examples include those made of resins such as polyethylene (PE), polypropylene (PP), polyester, and polyamide. The separator may have a single-layer structure, or may have a multilayer structure. Examples of separators having a multilayer structure can include separators having a PE/PP two-layer structure and separators having a PP/PE/PP or PE/PP/PE three-layer structure. The separator may consist of a nonwoven fabric such as cellulose nonwoven fabric, resin nonwoven fabric, or glass-fiber nonwoven fabric.

### 1.3.3 Additional components

The binder that can be contained in the electrolyte layer 20 needs only to be appropriately selected from among ones exemplified as a binder that can be contained in the positive electrode mixture layer 11 described above. The binder may be of one type used alone, or may be of two or more types used in combination. The electrolyte layer 20 may comprise various additives.

### 1.3 Negative electrode

As shown in FIG. 1, the negative electrode 30 of the battery 100, for example, may comprise a negative electrode active material layer 31 and a negative electrode current collector 32 in contact with the negative electrode active material layer 31. In one embodiment, the negative electrode 30 may involve deposition of metallic lithium during charging, and may involve dissolution of metallic lithium during discharging. In this case, metallic lithium is regarded as constituting the negative electrode active material layer 31. In this case, for the purpose of uniformizing the deposition and dissolution of metallic lithium, an intermediate layer may be present between the electrolyte layer 20 and the negative electrode 30. The type of intermediate layer is not particularly limited, and may be a layer comprising an element capable of alloying with metallic lithium.

### 1.3.1 Negative electrode active material layer

The negative electrode active material layer 31 involves deposition and dissolution of metallic lithium, as described above. Specifically, the battery 100 may be configured so that metallic lithium undergoes deposition between the electrolyte layer 20 and the negative electrode current collector 32 during charging, and the metallic lithium between the electrolyte layer 20 and the negative electrode current collector 32 undergoes dissolution (ionization) during discharging so as to return to the positive electrode. "Metallic lithium" in this case is a concept that includes elemental lithium and lithium alloys. Specifically, in the battery 100, metallic lithium may be deposited as elemental lithium, or may be deposited as an alloy with another metal. Examples of lithium alloys include Li-Mg, Li-Sn, Li-Al, Li-B, Li-C, Li-Si, Li-Ca, Li-Ga, Li-Ge, Li-As, Li-Se, Li-Ru, Li-Rh, Li-Pd, Li-Ag, Li-Au, Li-Cd, Li-In, Li-Sb, Li-Ir, Li-Pt, Li-Hg, Li-Pb, Li-Bi, Li-Zn, Li-Tl, Li-Te, and Li-At. The lithium alloy may be of one type, or may be of two or more types. The deposition amount of metallic lithium between the electrolyte layer 20 and the negative electrode current collector 32 is not particularly limited, and needs only to be appropriately adjusted in accordance with target battery performance. However, if the amount of metallic lithium deposited is excessively large, there are concerns such as concentration of pressure. In this regard, the deposition amount of metallic lithium, as a guideline, may be an amount so that the charge capacity of the battery 100, for example, is 1 mAh/cm² or more and 5 mAh/cm² or less.

The negative electrode active material layer 31 comprises a negative electrode active material, and may optionally comprise an electrolyte, a conductive aid, a binder, and various additives. The content of each component in the negative electrode active material layer 31 needs only to be appropriately determined in accordance with target battery performance. For example, when the entire solid content contained in the negative electrode active material layer 31 is 100% by mass, the content of the negative electrode active material may be 40% by mass or more, 50% by mass or more, 60% by mass or more, or 70% by mass or more, and may be 100% by mass or less, less than 100% by mass, 95% by mass or less, or 90% by mass or less. In this case, the shape of the negative electrode active material layer 31 is not particularly limited, and for example, may be a sheet having a substantially flat surface. The thickness of the negative electrode active material layer 31 in this case is not particularly limited, and for example, may be 0.1 µm or more, 1 µm or more, 10 µm or more, or 30 µm or more, and may be 2 mm or less, 1 mm or less, 500 µm or less, or 100 µm or less. For the negative electrode active material, any material known as a negative electrode active material for batteries can be adopted. For example, silicon-based active materials such as Si, Si alloys, and silicon oxides; carbon-based active materials such as graphite and hard carbon; various oxide-based active materials such as lithium titanate; and metallic lithium and lithium alloys described above can be adopted. The negative electrode active material may be of one type used alone, or may be of two or more types used in combination. The shape of the negative electrode active material needs only to be any general shapes of negative electrode active materials of batteries. For example, the negative electrode active material may be particulate. The negative electrode active material particles may be primary particles, or may be secondary particles of a plurality of agglomerated primary particles. The average particle diameter (D50) of the negative electrode active material particles, for example, may be 1 nm or more, 5 nm or more, or 10 nm or more, and may be 500 µm or less, 100 µm or less, 50 µm or less, or 30 µm or less. Alternatively, the negative electrode active material may be a foil-like or membranous metallic lithium, as described above. Specifically, the negative electrode active material layer 31 may consist of a sheet of negative electrode active material. The electrolyte that can be contained in the negative electrode active material layer 31, for example, includes the solid electrolytes and electrolytic solutions described above, and combinations thereof. The conductive material that can be contained in the negative electrode active material layer 31, for example, needs only to be appropriately selected from among carbon and metal materials other than carbon exemplified as a conductive material that can be contained in the positive electrode mixture layer 11 described above. The binder that can be contained in the negative electrode active material layer 31, for example, needs only to be appropriately selected from among one exemplified as a binder that can be contained in the positive electrode mixture layer 11 described above. The electrolyte, the conductive aid, and the binder may each be of one type used alone, or may be of two or more types used in combination.

### 1.3.2 Negative electrode current collector

For the negative electrode current collector 32, any material that can function as a negative electrode current collector for batteries can be adopted. The negative electrode current collector 32 may be a metal foil or a metal mesh, and alternatively, may be a carbon sheet. Particularly, a metal foil has excellent handleability. The negative electrode current collector 32 may consist of a plurality of foils or sheets. Metals constituting the metal foil as the negative electrode current collector 32 include at least one selected from Cu, Ni, Cr, Au, Pt, Ag, Al, Fe, Ti, Zn, Co, and stainless steel. Particularly, from the viewpoint of ensuring reduction resistance and the viewpoint of being less susceptible to alloying with lithium, the negative electrode current collector 32 may comprise at least one metal selected from Cu, Ni, and stainless steel, and preferably comprises at least one of Ni and stainless steel. The negative electrode current collector 32 may have on the surface thereof some coating layer. For example, the negative electrode current collector 32 may have on the surface thereof some protective layer. In one embodiment, the negative electrode current collector 32 may comprise a conductive material selected from the above metal foil, metal mesh, and carbon sheet, and a protective layer formed on the surface of the conductive material. The protective layer, for example, may comprise Mg. It is considered that due to the negative electrode current collector 32 having a protective layer comprising Mg, diffusion of Li on the surface of the negative electrode current collector 32 is promoted, affinity of metallic lithium for the negative electrode current collector 32 is increased, gaps between negative electrode current collector 32 and metallic lithium are suppressed, and metallic lithium is more uniformly deposited on the surface of the negative electrode current collector 32. When the negative electrode current collector 32 consists of a plurality of metal foils, there may be some layer between the plurality of metal foils. The thickness of the negative electrode current collector 32 is not particularly limited, and for example, may be 0.1 µm or more or 1 µm or more, and may be 1 mm or less or 100 µm or less.

### 1.4 Additional configurations

The battery 100 may be provided with any general configuration as a battery, for example, tabs or terminals, in addition to the above configurations. The above configurations of the battery 100 may each be housed inside an outer packaging. Any known outer packaging can be adopted as an outer packaging of the battery. In addition, a plurality of batteries 100 may be optionally connected electrically and optionally stacked to form a battery pack. In this case, the battery pack may be housed inside a known battery case. Examples of shapes of the battery 100 can include coin type, laminate type, cylindrical type, and square type. The battery 100 may comprise a constraining member for constraining each of the above configurations in the thickness direction. The constraining pressure applied by the constraining member is likely to lower internal resistance of the battery. The constraining pressure by the constraining member is not particularly limited. The constraining pressure by the constraining member may be 5 MPa or less, 3 MPa or less, or 1 MPa or less. The battery 100 may be a secondary battery. The battery 100 may be a lithium-sulfur battery (LiS battery). The battery 100 may be an all-solid battery substantially free of a liquid electrolyte. The battery 100 may be an all-solid lithium-sulfur battery.

### 2. Method for manufacturing battery

The battery 100, except that the above positive electrode mixture is used, can be manufactured by applying any known method. In one embodiment, the battery 100, for example, can be manufactured as follows. However, the method for manufacturing a battery 100 is not limited to the following method, and each layer may be formed by, for example, dry molding.
(1) A sulfur-based active material constituting a positive electrode mixture layer is dispersed in a solvent to obtain a positive electrode layer slurry. The solvent used in this case is not particularly limited, and various organic solvents can be used. The roughened surface (contact surface) of the positive electrode current collector is coated with the positive electrode layer slurry using a doctor blade, followed by drying, whereby a positive electrode mixture layer is formed on the roughened surface (contact surface) of the positive electrode current collector to obtain a positive electrode.
(2) A metallic lithium foil as a negative electrode active material is prepared and combined with a negative electrode current collector to obtain a negative electrode. Alternatively, a negative electrode active material constituting a negative electrode active material layer is dispersed in a solvent to obtain a negative electrode layer slurry. The solvent used in this case is not particularly limited, and water and various organic solvents can be used. The surface of the negative electrode current collector is coated with the negative electrode layer slurry using a doctor blade, followed by drying, whereby a negative electrode active material layer is formed on the surface of the negative electrode current collector to obtain a negative electrode.
(3) Layers are laminated so that an electrolyte layer (solid electrolyte layer or separator) is interposed between the negative electrode and the positive electrode to obtain a laminated body comprising, in the order of, a negative electrode current collector, a negative electrode active material layer, an electrolyte layer, a positive electrode mixture layer, and a positive electrode current collector. Additional members such as terminals are attached to the laminated body, as necessary.
(4) The laminated body is housed in a battery case. In the case of an electrolytic solution battery, the battery case is filled with an electrolytic solution. The laminated body is sealed in the battery case so that the laminated body is immersed in the electrolytic solution, whereby a battery is obtained.

### 3. Vehicle

As described above, the battery of the present disclosure has excellent cycle characteristics. Such a battery, for example, can be suitably used in at least one type of vehicle selected from hybrid vehicle (HEV), plug-in hybrid vehicle (PHEV), and electric vehicle (BEV). Specifically, the technique of the present disclosure relates to a vehicle comprising a battery, wherein the battery comprises a positive electrode mixture layer, an electrolyte layer, and a negative electrode; the positive electrode mixture layer comprises a sulfur-based active material, a P-containing sulfide, and carbon; BET specific surface area of the carbon is 350 m²/g or more; and the molar ratio P/S between P and S contained in the positive electrode mixture layer is greater than 0.06 or less than 0.24. Each configuration of the battery is as described above.

### EXAMPLES

From the foregoing, one embodiment of the battery has been described. However, the technique of the present disclosure can be modified in various ways other than the above embodiment in ranges that do not depart from the spirit of the invention. Hereinafter, the technique of the present disclosure will be further described with reference to the Examples. However, the technique of the present disclosure is not limited to the following Examples.

### 1. Production of positive electrode mixture

Elemental sulfur (80°C vacuum-dried product) as a sulfur-based active material, P₂S₅ as a P-containing sulfide, and carbon (120°C vacuum-dried product) as a conductive material were weighed so as to obtain a predetermined mass ratio, and mixed in a mortar to obtain a mixture. 1.7 g of the mixture and 80 g of φ4-mm zirconia balls were added per ball mill pot, and mixed by a planetary ball mill at 400 rpm for 36 h. After mixing by planetary ball mill, the mixture was dry-classified using a 38-µm sieve to obtain a positive electrode mixture. For the carbon, any of single-walled carbon nanotube (single-walled CNT), multi-walled carbon nanotube (multi-walled CNT), or porous carbon was used. For the multi-walled CNT, two types of multi-walled CNT having different specific surface areas were prepared, and one or the other was used.

### 2. Production of pressed cell

Using the positive electrode mixture produced as described above, a φ11.28-mm pressed cell was produced by the following procedure. The configuration of the produced pressed cell is as shown in FIG. 2.
(1) 100 mg of a sulfide solid electrolyte was placed into a cell and pressed at 1 ton.
(2) 7.6 mg of the positive electrode mixture was placed on the upper side of the sulfide solid electrolyte layer within the cell and pressed at 1 ton.
(3) An Al foil punched to φ11.28 mm was placed on the upper side of the positive electrode mixture layer within the cell and pressed at 6 tons.
(4) A Li-10 wt% Mg alloy foil (thickness of 100 µm) and a Ni foil, punched to φ11.28 mm, were placed in this order on the lower side of the sulfide solid electrolyte layer within the cell and pressed at 1 ton.
(5) The cell was constrained to a fixed size with a constraining pressure of 2 Nm (corresponding to approximately 30 MPa) to obtain a pressed cell for evaluation.

### 3. Evaluation method

### 3.1 BET specific surface area

The BET specific surface area of carbon used in the positive electrode mixture was measured. It can be said that the BET specific surface area of the carbon is substantially the same before and after mixing in the planetary ball mill. For the measurement results, the BET specific surface area of the single-walled CNT was 1188 m²/g, the BET specific surface area of the multi-walled CNT (1) was 275 m²/g, the BET specific surface area of the multi-walled CNT (2) was 387 m²/g, and the BET specific surface area of the porous carbon was 1517 m²/g.

### 3.2 Molar ratio P/S

From the mixing ratio between elemental sulfur and P₂S₅ at the time of positive electrode mixture production, the molar ratio P/S in the positive electrode mixture layer was determined.

### 3.3 Electrochemical measurement

For the pressed cell produced as described above, a constant-current charge/discharge test was carried out at 60°C with a cutoff potential in the range of 3.1 V to 1.2 V vs. Li⁺/Li and 1 C = 5.84 mA/cm², using the following protocol.
Conditioning (1.2 V discharge) and cycles 1 to 3: current density of 0.584 mA/cm², corresponding to 0.1 C
Subsequent cycles: current density of 1.168 mA/cm², corresponding to 0.2 C

### 4. Evaluation results

Table 1 below shows the type of carbon contained in the positive electrode mixture layer, the BET specific surface area of carbon contained in the positive electrode mixture layer, the mass ratio between elemental sulfur, P₂S₅, and carbon in the positive electrode mixture layer, the molar ratio P/S in the positive electrode mixture layer, the discharge capacity C0 during conditioning, the discharge capacity C1 at charge/discharge cycle 1, and the discharge capacity C20 at charge/discharge cycle 20.

**(Table 1)**

| | Type of carbon | BET specific surface area of carbon [m2/g] | Mass ratio S:P2S5:C | Molar ratio P/S | C0 [mAh/g] | C1 [mAh/g] | C20 [mAh/g] | C20/C1 × 100 |
|---|---|---|---|---|---|---|---|---|
| Comparative Example 1 | Single-walled CNT | 1188 | 10:67:23 | 0.331 | 969 | 843 | 742 | 88.02% |
| Comparative Example 2 | Single-walled CNT | 1188 | 15:62:23 | 0.300 | 1011 | 848 | 753 | 88.80% |
| Comparative Example 3 | Single-walled CNT | 1188 | 25:52:23 | 0.240 | 1013 | 853 | 759 | 88.98% |
| Example 1 | Single-walled CNT | 1188 | 32:45:23 | 0.201 | 1025 | 868 | 819 | 94.35% |
| Example 2 | Single-walled CNT | 1188 | 37:40:23 | 0.175 | 1032 | 879 | 833 | 94.77% |
| Example 3 | Single-walled CNT | 1188 | 42:35:23 | 0.150 | 1079 | 940 | 882 | 93.83% |
| Example 4 | Single-walled CNT | 1188 | 52:25:23 | 0.103 | 1083 | 841 | 796 | 94.65% |
| Comparative Example 4 | Single-walled CNT | 1188 | 62:15:23 | 0.059 | 1061 | 431 | 178 | 41.30% |
| Comparative Example 5 | Multi-walled CNT | 275 | 42:35:23 | 0.150 | 1003 | 764 | 603 | 78.93% |
| Example 5 | Multi-walled CNT | 387 | 42:35:23 | 0.150 | 1069 | 888 | 795 | 89.53% |
| Example 6 | Porous carbon | 1517 | 42:35:23 | 0.150 | 1076 | 932 | 851 | 91.31% |

From the results shown in Table 1, it can be said that a battery comprising a positive electrode mixture layer, an electrolyte layer, and a negative electrode and satisfying (1) to (3) below has excellent cycle characteristics.
(1) The positive electrode mixture layer comprises a sulfur-based active material, a P-containing sulfide, and carbon.
(2) BET specific surface area of the carbon is 350 m²/g or more.
(3) A molar ratio P/S between P and S contained in the positive electrode mixture layer is greater than 0.06 and less than 0.24.

In the above Examples, an aspect in which the positive electrode mixture layer comprises a sulfur-based active material, P₂S₅ as the P-containing sulfide, and carbon as the conductive material and does not comprise other components was exemplified. However, the components of the positive electrode mixture layer are not limited thereto. It is considered that as long as (1) to (3) are satisfied in the positive electrode mixture layer, excellent cycle characteristics are ensured.

### REFERENCE SIGNS LIST

- 100: battery
- 10: positive electrode
- 11: positive electrode mixture layer
- 12: positive electrode current collector
- 20: electrolyte layer
- 30: negative electrode
- 31: negative electrode active material layer
- 32: negative electrode current collector

## Claims

1. A battery, comprising a positive electrode mixture layer, an electrolyte layer, and a negative electrode, wherein
the positive electrode mixture layer comprises a sulfur-based active material, a P-containing sulfide, and carbon,
BET specific surface area of the carbon is 350 m²/g or more, and
a molar ratio P/S between P and S contained in the positive electrode mixture layer is greater than 0.06 and less than 0.24.

2. The battery according to claim 1, wherein
the carbon is carbon nanotube.

3. The battery according to claim 1 or 2, wherein
BET specific surface area of the carbon is 1000 m²/g or more.

4. The battery according to any one of claims 1 to 3, wherein
the electrolyte layer comprises a solid electrolyte.

5. The battery according to any one of claims 1 to 4, wherein
the negative electrode involves deposition of metallic lithium during charging, and involves dissolution of metallic lithium during discharging.
